# EUROPEAN PATENT APPLICATION

(11) **EP 1 688 038 A1**
(43) Date of publication of application: **09.08.2006**
(21) Application number: 06100632.6
(22) Date of filing: 20.01.2006
(51) Int. Cl.: A01N 31/02, A01N 65/00, A01P 7/04

(54) **Insecticidal composition**

(30) Priority: 26.01.2005 IT PD20050018
(71) Applicant: MULTITECNO S.r.l., 30025 Fossalta Di Portogruaro (Prov. of Venezia) (IT)
(72) Inventor: Reatti, Guido, 35128, Padova (IT)
(74) Representative: Modiano, Micaela Nadia

(57) **Abstract**

A composition of an insecticide, useful particularly but not exclusively for eliminating ants, which comprises polyethylene glycol (PEG) and attractant. The insecticidal action is of a substantially mechanical type, since the PEG ingested by the insect, upon contact with the liquids that are present in the digestive system, expands and blocks the system. The insects, lacking peristalsis, are unable to move the occlusion and thus die.

## Description

The present invention relates to an insecticide composition, useful particularly but not exclusively to eliminate ants.

A large number of insecticidal products is currently known.

These products are mostly toxic both for human beings and for animals and are also often noxious for plants and for the environment in general.

The toxicity and noxiousness of insecticides is felt particularly in domestic use, when it is necessary to exterminate insects, such as for example ants, which visit storage cupboards or other places where food intended for human beings (or animals) is present; in this case, the risk of food contamination is high.

Another problem is linked to the risk of intoxication of children who, prompted by the curiosity that is typical of childhood, tend to identify objects and substances by bringing them to their mouth.

A similar problem occurs with pets, which by their own very nature, if they do not smell an immediate danger, tend to taste anything within their reach, especially if it has received the addition of attractant substances, as often occurs in the case of insecticides.

The aim of the present invention is to provide an insecticide which is substantially non-toxic.

Within this aim, an object of the present invention is to provide an insecticide which has a negligible environmental impact.

Another object of the present invention is to provide an insecticide which is biodegradable in a short period.

Another object of the present invention is to provide an insecticide which can be stored in spaces where food is processed, preserved or stored.

Another object of the present invention is to provide an insecticide which can be produced with known systems and technologies.

This aim and these and other objects, which will become better apparent hereinafter, are achieved by an insecticidal composition, characterized in that it comprises polyethylene glycol and an attractant.

Further characteristics and advantages of the invention will become better apparent from the description of some preferred but not exclusive embodiments thereof, illustrated hereinafter.

An insecticidal composition according to the invention, particularly useful against ants, comprises polyethylene glycol, referenced hereinafter as PEG for the sake of brevity.

As it is known, the vast majority of insects does not have peristalsis of the digestive system and therefore the food that these insects eat moves along the walls of the hollow organs by being pushed by the newly ingested food.

PEG is a highly hydrophilic polymer.

If an insect, such as for example an ant (which does not have peristalsis), ingests PEG, upon contact with the liquids that are present in the intestine said PEG expands (absorbs liquids), clogging said intestine, without the insect being able to do anything (it lacks peristalsis and therefore cannot move the occlusion).

This situation leads to the death of the insect within a certain time.

The action is therefore mechanical, not chemical as occurs for most currently commercially available insecticides.

PEG, in order to expand correctly, preferably has molecular weight, estimated between 600 and 50,000 monomers.

Among these, a PEG with 35,000 monomers is most preferred. It is necessary to add an attractant to the composition in order to attract the insect. The attractant can be, for example, sweet substances as sugars, or proteic substances.

Preferably, said attractant is commercial-type acacia or mixed-flower honey (but other types of attractant can also be used).

In order to prevent the insecticide according to the invention from becoming dry, it is convenient to add a humectant.

Polyalcohols can be used conveniently as a humectant.

Preferably, 99% glycerol can be used among polyalcohols.

Ethylene glycol can also be used as humectant together with glycerol.

In order to prevent the components from separating, it is conveniently possible to use a thickener, such as carboxymethylcellulose, in the composition.

The variability of the amount by weight of the components of the insecticide with respect to the total weight of the composition is substantially as follows:
- polyethylene glycol (PEG): 2% to 40% by weight;
- water: 1 to 50% by weight;
- attractant: 2 to 80% by weight;
- glycerol (99%): 1.5 to 50% by weight;
- ethylene glycol: 0 to 50% by weight;
- carboxymethylcellulose: 0.01 to 10% by weight.

In particular, a first preferred composition has:
- polyethylene glycol 35,000 in an amount approximately equal to 16% by weight on the total;
- water in an amount approximately equal to 12.5% by weight on the total;
- honey in an amount approximately equal to 56.0% by weight on the total;
- glycerol (99%) in an amount approximately equal to 10% by weight on the total;
- ethylene glycol, in an amount approximately equal to 5.0% by weight on the total;
- carboxymethylcellulose, in an amount approximately equal to 0.5% by weight on the total.

A second preferred composition provides:
- polyethylene glycol 35,000 in an amount approximately equal to 16.5% by weight on the total;
- water in an amount approximately equal to 12.5% by weight on the total;
- honey in an amount approximately equal to 61.0% by weight on the total;
- glycerol (99%) in an amount approximately equal to 9.5% by weight on the total;
- carboxymethylcellulose, in an amount approximately equal to 0.5% by weight on the total;
- the water used is preferably deionized water. One method for preparing the insecticide comprises mixing at 37 °C polyethylene glycol with water and then leaving the mixture to rest at ambient temperature for a period of 12 to 14 hours.

The mixture is then stirred and honey and 99% glycerol are added (while continuing the shaking).

While maintaining the stirring, when a certain homogeneity is reached, carboxymethylcellulose is added until a new homogeneity is reached.

In practice it has been found that the invention thus described solves the problems noted in known types of insecticide; in particular, the present invention provides an insecticide which is non-toxic, since it is formed by components which are not toxic for human beings or animals.

The insecticidal action is in fact of a substantially mechanical type, since the PEG ingested by the insect, upon contact with the liquids present in the digestive system, expands and blocks said system.

The insects, by lacking peristalsis, cannot move the occlusion and thus die.

The biodegradability of the insecticide is also high, since said insecticide is formed by simple components.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000018 from which this application claims priority are incorporated herein by reference.

## Claims

1. An insecticidal composition, **characterized in that** it comprises polyethylene glycol (PEG) and attractant.

2. The composition according to claim 1, **characterized in that** it also comprises the following components: carboxymethylcellulose, humectant, water.

3. The composition according to claim 2, **characterized in that** said attractant is honey.

4. The composition according to claim 3, **characterized in that** said honey is of acacia or mixed-flower type.

5. The composition according to claim 2, **characterized in that** said humectant comprises polyalcohols.

6. The composition according to claim 5, **characterized in that** said humectant is 99% glycerol.

7. The composition according to claim 6, **characterized in that** said humectant further comprises ethylene glycol.

8. The composition according to one or more of the preceding claims, **characterized in that** said polyethylene glycol (PEG) is constituted by an average number of monomers comprised between 600 and 50,000.

9. The composition according to claim 8, **characterized in that** said polyethylene glycol (PEG) is constituted by an average number of monomers preferably equal to 35,000.

10. The composition according to one or more of the preceding claims, **characterized in that** it comprises, in the following amounts:
- polyethylene glycol (PEG): 2% to 40% by weight;
- water: 1 to 50% by weight;
- attractant: 2 to 80% by weight;
- glycerol (99%): 1.5 to 50% by weight;
- carboxymethylcellulose: 0.01 to 10% by weight.

11. The composition according to claim 10, **characterized in that** it comprises 0 to 50% by weight of ethylene glycol.

12. The composition according to one or more of the preceding claims, **characterized in that** it comprises:
- polyethylene glycol 35,000, in an amount equal to 16% by weight on the total weight of the composition;
- water in an amount equal to 12.5% by weight on the total weight of the composition;
- honey in an amount equal to 56.0% by weight on the total weight of the composition;
- 99% glycerol in an amount equal to 10.0% by weight on the total weight of the composition;
- ethylene glycol in an amount equal to 5.0% by weight on the total weight of the composition;
- carboxymethylcellulose, in an amount equal to 0.5% by weight on the total weight of the composition.

13. The composition according to one or more of claims 1 to 9, **characterized in that** it comprises:
- polyethylene glycol 35,000, in an amount equal to 16.5% by weight on the total weight of the composition;
- water in an amount equal to 12.5% by weight on the total weight of the composition;
- honey in an amount equal to 61.0% by weight on the total weight of the composition;
- 99% glycerol in an amount equal to 9.5% by weight on the total weight of the composition;
- carboxymethylcellulose, in an amount equal to 0.5% by weight on the total weight of the composition.

14. A method for preparing insecticide according to one or more of the preceding claims, comprising the steps of:
- mixing polyethylene glycol with water,
- leaving the mixture to rest at ambient temperature for a period comprised between 12 and 24 hours,
- stirring the mixture and adding honey and 99% glycerol while maintaining stirring until a homogeneous mixture is obtained;
- adding to said homogeneous mixture carboxymethylcellulose and maintaining the stirring until homogeneity is reached.

15. The method according to claim 14, **characterized in that** the mixture of polyethylene glycol and water is left to rest at ambient temperature for approximately 12 hours.

16. The use of polyethylene glycol (PEG) as insecticide.
